# EUROPEAN PATENT APPLICATION

(11) **EP 0 658 700 A2**
(43) Date of publication of application: **21.06.1995**
(21) Application number: 94309229.6
(22) Date of filing: 09.12.1994
(51) Int. Cl.: F16F 9/02, F16F 9/43, F16F 9/34, F16F 9/516

(54) **Gas springs, a valve therefor, and a valve housing**

(30) Priority: 10.12.1993 GB 9325345
(71) Applicant: Development Enterprises Limited, Slough, Berkshire SL1 4LN (GB)
(72) Inventor: King, Alastair Wyndham Gordon, Trowbridge, Wiltshire BA14 6JX (GB); Pappenheim, Egon, Maidenhead, Berkshire SL6 3QU (GB)
(74) Representative: Wolff, Francis Paul

(57) **Abstract**

A spool valve for use in the piston (12) of a gas spring to allow compressed gas to be transferred to extend or retract the spring comprises a tubular sleeve (18) which is a composite of two identical complementary interlocking sleeve sections (18A, 18B), each of which has one flat end surrounded by a base flange (32) and the other end formed with diametrically opposite projecting steps (34) between diametrically opposite receiving steps (36), so that when the two parts are fitted together, gas ports (38) are formed between the respective steps. These ports can be partly occluded by hinged flaps (40), which allow gas to flow in one direction through the valve faster than in the other direction.

## Description

This invention relates to gas springs, which generally comprise sealed piston and cylinder assemblies charged with gas under pressure on either side of the piston. If a manually operated valve is provided to allow gas to pass from one side of the piston to the other, such gas springs can be used as stepless height adjusters for chairs, tables, computer consoles and the like.

Because of the volume occupied by the piston rod on one side of the piston, retraction of such gas springs reduces their total internal volume and therefore increases their internal gas pressure. If the gas transfer valve is opened and no load is put on the spring, it will naturally extend fully. If the gas spring is used as a height adjustable support, the relation between internal gas pressure and piston rod diameter would normally be chosen so that a pre-determined load on the spring when the valve is opened will be sufficient to retract the spring. The work done is of course stored as increased gas pressure and is available to extend the spring later, against a maximum load that depends on the piston rod area and gas pressure, when the valve is opened.

Gas transfer between the two ends of the cylinder is often accomplished through a surrounding gas jacket, with the transfer valve being located at one end of the cylinder. However, alternative arrangements have been proposed from time to time, and these include the location of the transfer valve in the piston itself.

One example of such a proposal is to be found in European patent No 0277298. This describes a transfer valve housing with a longitudinal passage communicating with the closed end of the cylinder and with a lateral vent communicating with the piston rod end of the cylinder, and a valve spool in the housing which can be operated to open the valve by means of a push rod passing down the centre of the piston rod.

The design considerations for a valve of this nature will include manufacturing costs, including minimising the number of operations required (such as moulding and drilling); the gas leakage that may arise at surface discontinuities, such as where mould halves are separated; and tooling costs, including minimising the numbers of different parts.

The present invention is concerned with a valve suitable for use as a gas transfer valve in a gas spring piston which takes the foregoing considerations into account.

The invention concerns aspects of the valve described below. The scope of the invention extends to all novel aspects of the valve whether individually or in combination with other features as described herein.

More specifically, the invention may in one aspect provide a tubular valve housing having a continuous flow path therethrough, said flow path having a longitudinal part and a lateral part, the longitudinal part comprising a passage extending from one end of the valve housing to the interior thereof within a surrounding wall, and the lateral part comprising a vent extending outwardly from the interior of the valve housing through the said wall.

The vent may include a variable flow restrictor whereby inward and outward fluid flows through the vent are differently moderated.

Alternatively or additionally, the valve housing may be formed of two complementary abutting tubular sections, at least one of which has a stepped end where it abuts an end of the other, wherein gaps between the abutting ends define the vents. Preferably, both sections have circumferentially stepped ends where they abut each other, and the steps interlock; more preferably, the two sections are identical to each other.

In another aspect of the invention, a fluid flow control valve may comprise a valve housing as aforesaid and a valve member therein which is movable between an open disposition in which fluid may flow along the flow path through the valve body and a closed disposition in which the flow path is shut off. Such a valve member may be movable by displacement or by rotation, but preferably by displacement to occlude or not the passage at the said one end of the valve body. In a particular embodiment, the valve is a spool valve in which a spool is displaceable axially within a sleeve.

The variable flow restrictor may comprise a hinged flap or other obstruction displaceable by flowing fluid; the degree of displacement will normally depend upon the direction of fluid flow through the valve.

In a further aspect, the invention provides a gas spring comprising a pressurised piston and cylinder assembly and a gas flow control valve in the piston to control gas flow through the piston from one end of the cylinder to the other. Preferably, gas flow through the valve is more restricted during the retraction stroke of the piston than on the extension stroke, when the valve is open.

One embodiment of the invention is shown by way of example in the accompanying drawings, in which:
Figure 1 is a longitudinal sectional view of a gas spring in accordance with the invention;
Figure 2 is a similar section but enlarged showing principally the piston and corresponding piston rod end, with a gas transfer valve, the valve being closed;
Figure 3 is a view corresponding to Figure 2 but showing the transfer valve open;
Figure 4 is a longitudinal cross section through the tubular housing of the transfer valve; and
Figure 5 is an isometric view showing the two halves of the transfer valve housing, separated.

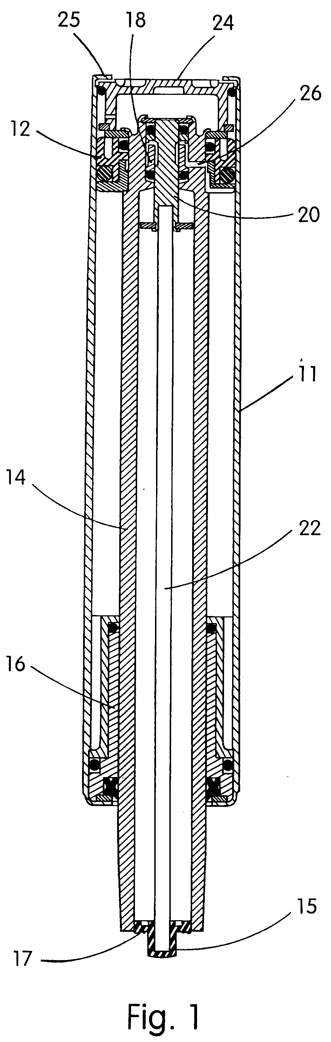

The cylinder of the gas spring shown in Figure 1 comprises outer tube 11, which has a honed passage in which a piston 12 slides. The piston is mounted on one end of a hollow piston rod 14 which is sealingly and slidingly supported by a bush 16 at one end of the cylinder, from which it protrudes. The bush also acts as a bearing during rotation of the rod in the tube.

At the piston end, the piston rod accommodates a transfer valve housing in the form of a sleeve 18 containing valve spool 20, which can be manually actuated by depressing a flanged valve operating button 15 at the end of a push rod 22, which passes through the centre of the piston rod. The operating button is retained in the piston rod end by a circlip 17.

In an alternative arrangement (not shown), push rod 22 can be replaced by oil, with the provision of appropriate oil seals. Operating button 15 will then actuate a plunger whose movement will be hydraulically transmitted to valve spool 20. In a variation, the hydraulic operating button can be remote from the gas spring.

The other end of the cylinder is closed by end plug 24, which is held in place against the internal gas pressure by spinning over the end 25 of the tube 11.

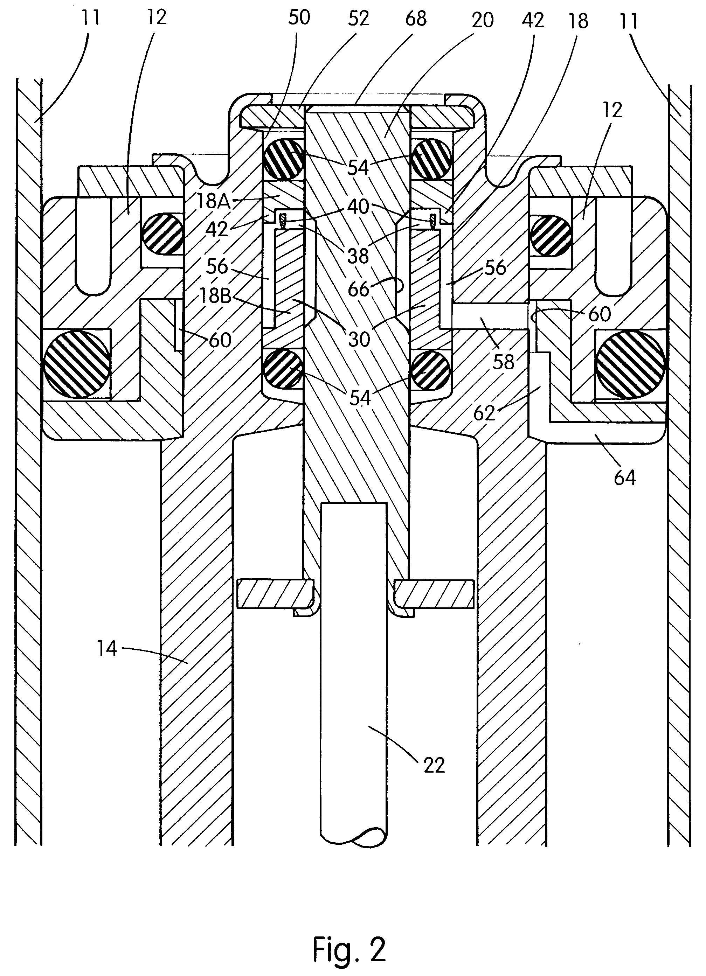

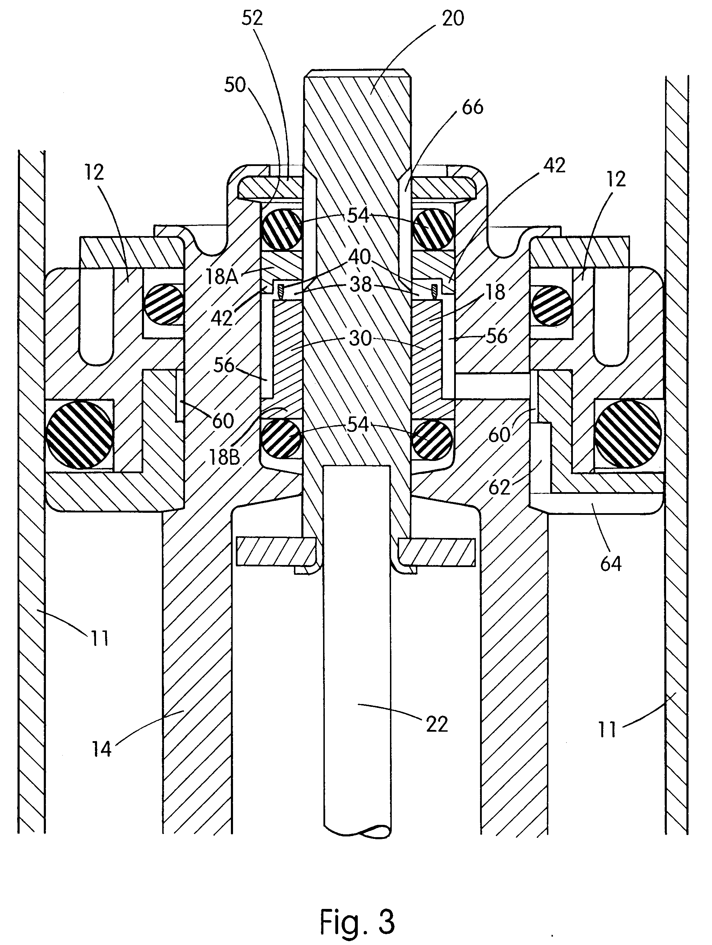

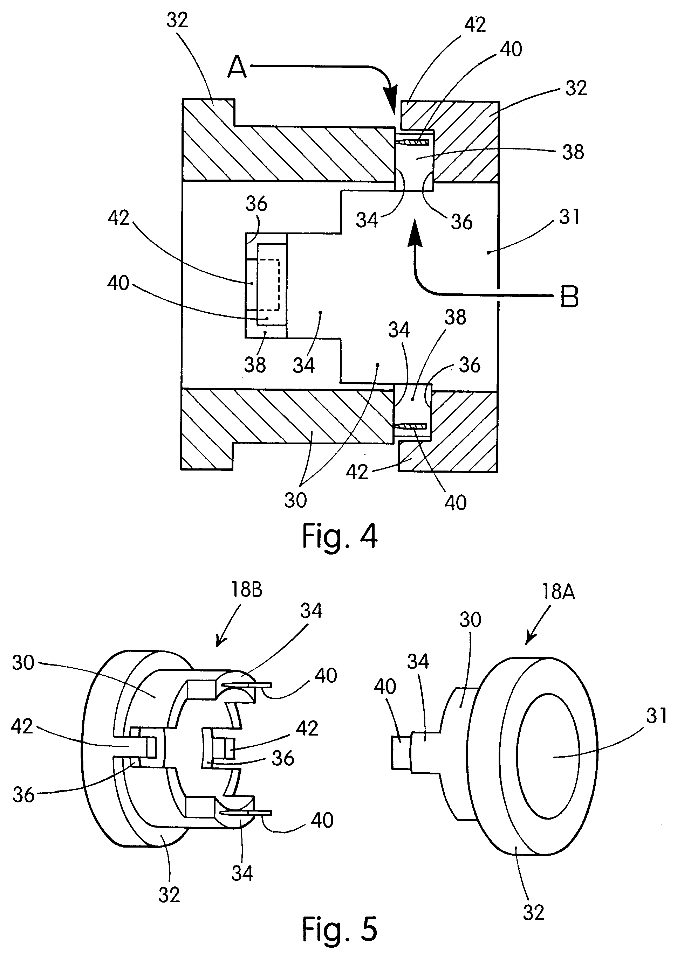

The action of the transfer valve is shown more clearly in Figures 2 and 3, in which it is depicted closed and open respectively, and its construction is best seen from Figures 4 and 5.

With reference to these Figures, the transfer valve can be seen to consist essentially of spool 20 in tubular sleeve 18, which itself is a composite of two identical interlocking sleeve sections 18A, 18B.

Each of the sleeve sections 18A, 18B comprises a short cylindrical side wall 30, having one plane end surrounded by a base flange 32 and the other end formed with diametrically opposite projecting steps 34 symmetrically placed with respect to two diametrically opposite receding steps 36, such that when the two halves are placed with their stepped ends in abutment the steps can be interlocked, preventing relative rotation and misalignment. In this manner, the two halves form a complete valve sleeve, with an open cylindrical passage 31 through its centre. One end of this passage is destined to become the longitudinal part of a gas flow path through the assembled valve.

The projecting steps 34 are shorter than the receding steps, with the result that two pairs of diametrically opposed gaps, with a longitudinal spacing between each pair and also a 90° rotational spacing between each pair, are present as lateral vents 38 through the composite side wall 30 of the valve sleeve.

It will be understood that other numbers and arrangements of steps are possible to achieve a similar result.

Each vent is occupied and partially but not completely occluded by a hinged flap 40 protruding from the end face of each projecting step 34. Outside each receding step, a lug 42 projects from the adjacent base flange 32. In the assembled sleeve, the lugs 42 prevent any substantial outward movement of the flaps 40, but do not interfere with their inward movement. The result is that gas under any given pressure differential can flow relatively freely in the direction A through the vents from the outside of the sleeve between the two base flanges 32 into the central cylindrical passage, but with a moderated flow rate in the reverse direction B.

By constructing the sleeve 18 in this manner, only a single injection moulding is required. Further, no drilling is necessary to form the lateral gas flow passages, and no mould half separation marks need to be left at any point where gas sealing is required.

In use, the composite valve sleeve 18 is received in the end of the piston rod 14, in a recess 50, where it is retained between two gas sealing **O**-rings 54 by washer 52. All four of the vents 38 in the valve sleeve communicate with a surrounding annular space 56 defined between the sleeve side walls 30, the base flanges 32, and the side wall of the recess 50. Through this recess wall a radial bore 58 is provided which communicates with a shallow annular groove 60 extending around the inside of piston 12. This annular groove 60 is in turn intersected by a **V**-section longitudinal groove 62 on the inner face of the piston, between the piston and the piston rod 14; and this finally communicates with a radial **V** groove 64 which is exposed to the interior of the tube 11 on the piston rod side of the piston.

The valve spool 20, mounted on the end of push rod 22, is cylindrical with a circumferential waist portion 66. When the valve is closed (Figure 2) the waist lies wholly within the valve sleeve 18. However, when the spool is advanced by means of the push rod, the waisted portion 66 is able to connect the head space at the closed end of cylinder tube 11 with the foremost pair of lateral vents in the valve sleeve 18. This establishes a continuous gas flow path between the two sides of the piston 12, by way of the waisted portion 66 of the spool within the cylindrical flow passage in the sleeve, the two vents 38, the annular space 56, radial bore 58, annular piston groove 60, and **V** grooves 62 and 64.

It will be appreciated that the rearmost two vents in the sleeve 18 are redundant. Their presence does however ensure that the two sleeve sections 18A, 18B can be made identical, and that it does not matter which way round the sleeve 18 is installed in the piston rod end during assembly of the gas spring.

When the gas spring is charged and under pressure, gas pressure on the face of leading end 68 of spool 20 ensures that the normal position of the gas transfer valve is closed. When the gas transfer valve is held open, by sustained manual or lever pressure on the operating button 15, the neutral position of the piston 12 in the tube 11, ie the equilibrium extension of the gas spring, can be adjusted. The differential action of the hinged flaps 40 so governs the gas flow rates through the valve that, under similar external forces, the gas spring retracts more slowly than it extends. Further, if shock loading conditions are experienced when the valve is open, the gas transfer rate is limited by the narrowness of the **V** grooves 62 and 64.

## Claims

1. A valve housing having a continuous flow path therethrough, said flow path having a longitudinal part and a lateral part, the longitudinal part comprising a passage (31) extending from one end of the valve housing (18) to the interior thereof within a surrounding wall (30) and the lateral part comprising a vent (38) extending outwardly from the interior of the valve housing through the said wall; **characterised in that** the valve housing is formed of two complementary abutting tubular sections (18A, 18B), at least one of which has a stepped end (36) where it abuts an end (34) of the other, wherein a gap (38) between the abutting ends defines the vent.

2. A valve housing according to claim 1 **further characterised in that** both sections (18A, 18B) have circumferentially stepped ends (34, 36) where they abut each other, and the steps interlock.

3. A valve housing according to claim 2, **further characterised in that** the two sections (18A, 18B) are identical to each other.

4. A valve housing according to any one of the preceding claims **further characterised** by a variable flow restrictor (40) whereby inward and outward fluid flows through the vent (38) are differently moderated.

5. A valve housing according to claim 4 **further characterised in that** the variable flow restrictor comprises an obstruction (40) displaceable by flowing fluid, wherein the degree of displacement depends upon the direction of fluid flow through the valve housing.

6. A valve housing according to claim 5 **further characterised in that** the obstruction comprises a hinged flap (40).

7. A fluid flow control valve comprising a valve housing (18) and a valve member (20) therein which is movable between an open disposition in which fluid may flow along a flow path through the valve body and a closed disposition in which the flow path is shut off; **characterised in that** the valve housing is as claimed in any one of claims 1 to 6.

8. A fluid flow control valve according to claim 7, **further characterised in that** the valve is a spool valve in which a spool (20) is displaceable axially within a sleeve (18A, 18B).

9. A gas spring comprising a pressurised piston and cylinder assembly (11, 12, 14) and a gas flow control valve (18, 20) in the piston (12) to control gas flow through the piston from one end of the cylinder (11) to the other; **characterised in that** the gas flow control valve is as claimed in claim 7 or claim 8.

10. A gas spring according to claim 9, **further characterised in that** the gas flow path through the valve (18, 20) is more restricted during the retraction stroke of the piston (12) than on the extension stroke, when the valve is open.
